# EUROPÄISCHE PATENTSCHRIFT

(11) **EP 1 776 565 B1**
(45) Veröffentlichungstag und Bekanntmachung des Hinweises auf die Patenterteilung: **13.05.2009**
(21) Anmeldenummer: 05776206.4
(22) Anmeldetag: 14.07.2005
(51) Int. Cl.: G01D 11/24, B60R 21/01

(54) **SENSOR FÜR KRAFTFAHRZEUGE**
SENSOR FOR MOTOR VEHICLES
DETECTEUR DE VEHICULES AUTOMOBILES

(30) Priorität: 15.07.2004 DE 102004034290
(43) Veröffentlichungstag der Anmeldung: 25.04.2007
(73) Patentinhaber: Continental Automotive GmbH, 30165 Hannover (DE)
(72) Erfinder: BRANDMEIER, Thomas, 93173 Wenzenbach (DE); CHRISTOPH, Markus, 93055 Regensburg (DE); WIEAND, Christian, 93173 Grünthal (DE); PLANKL, Christian, 93055 Burgweinting (DE)
(86) Internationale Anmeldenummer: PCT/EP2005/053389
(87) Internationale Veröffentlichungsnummer: WO 2006/005769

(56) Entgegenhaltungen:
- EP-A- 0 261 555
- DE-A1- 19 738 803
- US-A- 3 557 628
- US-A- 4 011 472
- US-A- 4 771 637
- US-A- 5 029 474
- US-A- 5 155 660

## Beschreibung

Die Erfindung betrifft ein elektrisches Gerät, insbesondere einen Sensor für ein Kraftfahrzeug, das zur Befestigung an einer Anbaufläche ausgebildet ist. Einen solchen Sensor ist aus den US 3557628A gemäß Oberbegriffs des Anspruchs 1 bekannt.

Zum Ansteuern und Auslösen eines Personenschutzsystems in einem Kraftfahrzeug, wie einem Airbag oder einem anderen Personenschutzsystem, werden zur Detektion eines Aufpralls bislang überwiegend auf Druck oder Beschleunigung reagierende Sensoren verwendet. In Zukunft sollen verstärkt auf der Basis von Körperschallsignalen arbeitende Sensoren zum Ansteuern und Auslösen eines Personenschutzsystems eingesetzt werden. Der Vorteil eines auf Körperschall reagierenden Sensors gegenüber einem eine Beschleunigung oder einen Druck erfassenden Sensor besteht in der Möglichkeit, genauere Informationen über den Aufprall erlangen zu können, z.B. über die Auswertung des erfassten Körperschall-Spektrums.

Zur sicheren Übertragung eines Körperschallsignals bei einem Fahrzeug-Crash in einem Karosseriebauteil auf einen Körperschallsensor muss dieser möglichst steif an die Karosserie des Kraftfahrzeugs angebunden sein. Der als SMT(Surface-Mounted Technology)-Bauteil realisierte Körperschallsensor ist in einem Gehäuse angeordnet, welches vorzugsweise an einem Karosseriebauteil im Motorraum angebracht ist.

Ein beispielhaftes Gehäuse für einen Sensor ist in der DE 197 38 803 A1 beschrieben. Das dort offenbarte Gehäuse besteht aus einem durch Spritzgießen geformten Gehäuse aus Kunststoff mit an voneinander abgewandten Seiten angeformten Befestigungsflanschen. Die Befestigungsflansche weisen je einen rechtwinklig zur Anbaufläche verlaufenden Durchbruch für den Durchtritt eines Schraubenbolzens auf. Die Durchbrüche liegen innerhalb von Buchsen, von denen die Befestigungsflansche durchdrungen sind. Die Buchsen bestehen aus Metall und sind mit einem Werkstoff des Gehäuses formschlüssig umspritzt. Die Buchsen schließen mit der Oberseite der Befestigungsflansche bündig ab und treten dagegen um ein geringes Maß über die Unterseite der Befestigungsflansche hervor. Zur Befestigung des Gehäuses werden die Buchsen über an die Befestigungsfläche angeschweißte Schraubbolzen gesteckt, über die Muttern mit angepresstem Flansch gedreht werden, um das Gehäuse an der Befestigungsfläche zu sichern. Die Muttern greifen mit ihrem Flansch an der freiliegenden Stirnseite der Buchsen an. Dadurch wird die Spannkraft der Schraubverbindung lediglich von den Buchsen auf das Bauteil abgeleitet.

Die DE 197 38 803 offenbart nicht, für welche Art von Sensoren das Gehäuse verwendet werden soll. Die unverfälschte Übertragung von Körperschallsignalen, welche sich in der Karosserie bei einem Fahrzeug-Crash ausbreiten, auf einen im Innern des Gehäuses angeordneten Körperschallsensor ist bei dieser Anordnung jedoch nicht zuverlässig gewährleistet, da das "welche" Kunststoffmaterial des Gehäuses eine unverfälschte Übertragung auf den Sensor nicht zulässt.

Die Aufgabe der vorliegenden Erfindung besteht deshalb darin, ein elektrisches Gerät anzugeben, welches es einem in diesem angeordneten, auf Körperschall reagierenden, Bauelement ermöglicht, in einer Anbaufläche verlaufende Körperschallsignale unverfälscht zu ermitteln und zur Auswertung an eine Auswerteeinheit weiterzugeben.

Diese Aufgabe wird mit einem elektrischen Gerät mit den Merkmalen des Patentanspruches 1 gelöst. Vorteilhafte Ausgestaltungen ergeben sich aus den abhängigen Patentansprüchen.

Das erfindungsgemäße elektrische Gerät, das zur Befestigung an einer Anbaufläche ausgebildet ist, ist mit einem Gehäuse und einer Trägerplatte ausgestattet, die über zumindest ein Verbindungsmittel mit dem Gehäuse steif verbunden ist, wobei die Trägerplatte zumindest ein auf Körperschall reagierendes elektronisches Bauelement trägt, das in unmittelbarer Nähe zu einem der Verbindungsmittel angeordnet ist.

Die unverfälschte Übertragung von Schallwellen ohne Verluste, Änderungen oder Abschwächungen lässt sich gemäß dem Gedanken der Erfindung dadurch bewerkstelligen, dass das als Körperschallsensor ausgebildete elektronische Bauelement möglichst steif an die Anbaufläche angebunden wird. Bewerkstelligt wird dies dadurch, dass der Körperschallsensor in unmittelbarer Nähe zu einem Verbindungsmittel angeordnet ist, so dass die in der Anbaufläche übertragenen Körperschallwellen über das Gehäuse und das Verbindungsmittel unmittelbar an den Körperschallsensor weitergeleitet werden.

Besonders bevorzugt ist es dabei, wenn das Gehäuse zweiteilig aus einem Gehäusemantel und einem Gehäusedeckel ausgeführt ist, da die Fertigung des elektrischen Geräts dann auf besonders einfache und kostengünstige Weise realisierbar ist.

In einer zweckmäßigen Ausgestaltung der Erfindung steht die den Körperschallsensor tragende Trägerplatte in direktem Eingriff mit dem Verbindungsmittel. Dies gewährleistet eine unmittelbare Anbindung der Trägerplatte an das Gehäuse und insbesondere den Gehäusemantel. Dadurch ist sichergestellt, dass die Trägerplatte - und damit der Körperschallsensor - eine starre Verbindung über das Gehäuse zu der Anbaufläche aufweist.

In einer anderen Variante ist vorgesehen, dass die Befestigung der Trägerplatte zur Übertragung von in der Anbaufläche erzeugten Körperschallwellen durch eine Klemmverbindung zwischen dem Gehäusemantel und dem Gehäusedeckel erfolgt. Ein direkter Eingriff des Verbindungsmittels mit der Trägerplatte erfolgt in dieser Variante nicht mehr. Ein derart ausgestaltetes elektrisches Gerät weist den Vorteil einer einfachen und zuverlässigen Herstellung auf.

Besonders bevorzugt ist es dabei, wenn der Gehäusedeckel eine der Anzahl der Verbindungsmittel entsprechende Anzahl an Durchbrüchen aufweist, in die jeweils eine Buchse eingelassen ist, wobei die auf die Trägerplatte wirkende Klemmkraft durch die Buchse und den Gehäusemantel ausgeübt wird. Um eine unmittelbare Übertragung von Schallwellen sicherzustellen, besteht die Buchse dabei aus einem steifen Material, bevorzugt einem Metall oder einer Keramik.

Aus Kosten- und Fertigungsgründen ist es bevorzugt, wenn der Gehäusedeckel aus einem Kunststoff gefertigt ist und die Buchsen aus Metall gefertigt sind und mit Material des Gehäusedeckels umspritzt sind. Eine formschlüssige Verbindung kann dadurch bewerkstelligt werden, dass die Buchsen außenumfangsseitig mit einer Anzahl an Vertiefungen oder einer umlaufenden Nut versehen sind.

Der unmittelbar mit der Anbaufläche verbundene Gehäusemantel wird zweckmäßigerweise aus einem steifen Material, insbesondere einem Metall, gefertigt. Besonders bevorzugt ist hierbei die Verwendung eines Aluminium-Druckguss-Gehäusemantels.

Es ist weiter bevorzugt, wenn die Buchsen zumindest über die dem Gehäuseinneren zugewandte Innenseite des Gehäusedeckels hervorragen. Dadurch ist sichergestellt, dass die auf die Trägerplatte ausgeübte Klemmkraft durch das Gehäuse und die Buchse erzeugt wird, welche jeweils aus steifen, harten Materialien bestehen. Hierdurch lässt sich die erforderliche gewünschte Steifigkeit der Anbindung des Körperschallsensors an die Anbaufläche erzielen.

Die Fertigung des Gehäusedeckels aus einem Kunststoff lässt auf einfache Weise die Gestaltung beliebiger Formen zu. Zweckmäßigerweise weist der Gehäusedeckel die Form eines Steckerelements auf und ist mit zumindest einem Kontaktelement versehen, das sich von einer Außenseite zu einer Innenseite des Gehäusedeckels erstreckt, um eine elektrische und mechanische Verbindung mit einem auf der Außenseite des Gehäusedeckels entsprechend ausgebildeten Adapter sowie mit der der Innenseite zugewandten Trägerplatte zu ermöglichen. Mit anderen Worten bedeutet dies, dass der Gehäusedeckel neben seiner Funktion als Gehäusebestandteil die Funktion einer Steckverbindung innehat. Durch das Vorsehen der durch den Gehäusedeckel hindurch tretenden Kontaktelemente lässt auf besonders einfache Weise eine elektrische Anbindung des elektrischen Geräts zu einem zentralen Steuergerät bewerkstelligen. Darüber hinaus ermöglicht der gemäß dieser Variante ausgebildete Gehäusedeckel die einfache elektrische Kontaktierung der Trägerplatte über die in den Gehäusedeckel ausgebildeten Kontaktelemente. Zur elektrischen Kontaktierung des Körperschallsensors auf der Trägerplatte sind somit lediglich zwei Steckverbindungen vorzunehmen.

Nach dem Zusammenfügen von Gehäusemantel und dem mit der Trägerplatte verbundenen Gehäusedeckel ist nach einer weiteren vorteilhaften Ausgestaltung der Erfindung auf die Außenseite des Gehäusedeckels zur Abdichtung des Gehäuseinneren gegen Feuchtigkeit eine Vergussmasse aufgebracht.

Zur Befestigung des elektrischen Geräts an einer Anbaufläche ist erfindungsgemäß vorgesehen, das Gehäuse mit zumindest einem Befestigungsflansch zu versehen, der einen rechtwinklig zur Anbaufläche verlaufenden Durchbruch für den Durchtritt eines weiteren Befestigungsmittels zur Befestigung des Gehäuses an der Anbaufläche aufweist.

Weitere Vorteile, Ausgestaltungen und Zweckmäßigkeiten des erfindungsgemäßen elektrischen Geräts werden nachfolgend anhand der Zeichnung näher erläutert. Es zeigen:
- Fig. 1: einen Schnitt durch ein erfindungsgemäßes elekt- risches Gerät,
- Fig. 2a,b: jeweils perspektivische Darstellungen der Außen- und Innenseite eines Gehäusedeckels des erfin- dungsgemäßen elektrischen Geräts,
- Fig. 3a,b: jeweils perspektivische Darstellungen der Außen- und Innenseite des Gehäusedeckels, wobei eine Trägerplatte auf die Innenseite aufgebracht ist,
- Fig. 4: eine perspektivische Darstellung eines Gehäuse- mantels des elektrischen Geräts,
- Fig. 5: eine perspektivische Darstellung des erfindungs- gemäßen elektrischen Geräts nach dem Zusammenfü- gen von Gehäusemantel und Gehäusedeckel, und
- Fig. 6: eine perspektivische Darstellung des erfindungs- gemäßen elektrischen Geräts, bei dem auf die Au- ßenseite des Gehäusedeckels eine Vergussmasse aufgebracht ist.

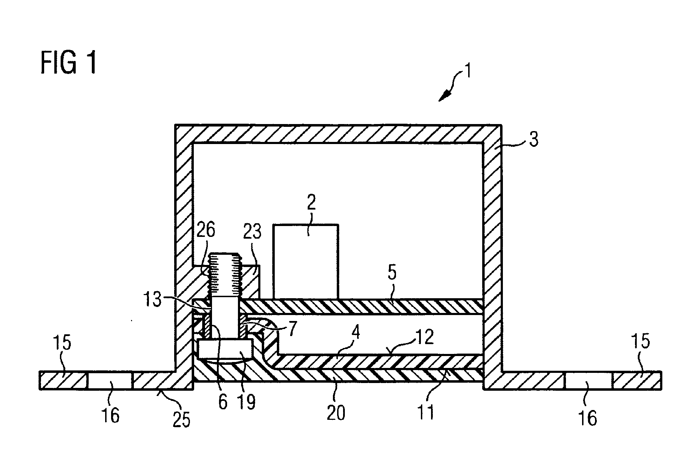

Figur 1 zeigt in einer Schnittdarstellung ein erfindungsgemäßes elektrisches Gerät 1. Das elektrische Gerät 1 weist einen Gehäusemantel 3 aus einem steifen Material, bevorzugt einem Metall sowie einen aus Kunststoff bestehenden Gehäusedeckel 4 auf. Der Gehäusemantel 3 hat - lediglich zum Zwecke der Beschreibung - an voneinander abgewandten Seiten angeformte Befestigungsflansche 15, in denen jeweils ein Durchbruch 16 eingebracht ist. Die Unterseite 25 des elektrischen Gerätes 1, mit dem dieses auf eine (in der Figur nicht dargestellte) Anbaufläche eines Bauteils aufgebracht wird, wird durch die Befestigungsflansche ausgebildet. Die Durchbrüche 16 der Befestigungsflansche sind zur Aufnahme von Befestigungsmitteln bestimmt. Bei den in der Figur nicht dargestellten Befestigungsmitteln kann es sich beispielsweise um an der Anbaufläche angeschweißte Schraubenbolzen handeln, welche rechtwinklig von der Anbaufläche des Bauteils, z.B. einem Karosseriebauteil eines Kraftfahrzeugs, mit parallel verlaufender Achse ausgehen. Obwohl in Fig. 1 nicht dargestellt, können die Durchbrüche 16 durch Metallbuchsen, welche in den Befestigungsflanschen angeordnet sind, versehen sein.

Die Anbindung des Gehäusemantels 3 an die Anbaufläche eines Bauteils und die Wahl eines möglichst steifen Materials des Gehäusemantels stellen sicher, dass sich in der Anbaufläche ausbreitende Körperschallwellen in nahezu unverfälschter Form auf den Gehäusemantel 3 des elektrischen Geräts 1 übertragen. Da ein die Körperschallwellen detektierender Sensor 2 nicht unmittelbar an dem Gehäusemantel 3 befestigt ist, sondern auf einer im Gehäuseinneren angeordneten Trägerplatte 5, muss sichergestellt werden, dass der Sensor 2 bzw. die Trägerplatte 5 möglichst steif an den Gehäusemantel 3 angebunden ist.

Dies wird erfindungsgemäß dadurch bewerkstelligt, dass die aus einem Epoxydharz (FR4) oder einer Keramik bestehende Trägerplatte 5 zwischen eine Auflagefläche 23 des Gehäusemantels 3 und den Gehäusedeckel 4 geklemmt ist. Um eine steife Anbindung der Trägerplatte 5 an den Gehäusemantel 3 sicherzustellen, weist der Gehäusedeckel 4 in einem Durchbruch 6 eine Metallbuchse 7 auf. Diese tritt zumindest auf der Innenseite 12 des Gehäusedeckels 4 hervor. Bevorzugt ist es, wie in der zeichnerischen Darstellung ausgeführt, wenn die Buchse 7 auch über die Außenseite 11 des Gehäusedeckels hervortritt.

Die Trägerplatte 5 weist an entsprechender Stelle ebenfalls einen Durchbruch 13 auf, wie dies auch in der Auflagefläche 23 der Fall ist. Durch das Eindrehen eines als selbstfurchende Schraube ausgebildeten Befestigungsmittels 19 in die Durchbrüche 6, 13 und 26 kann sichergestellt werden, dass die Trägerplatte 5 durch die Buchse 7 an die Auflagefläche 23 gepresst wird. Die Spannkraft der Schraubverbindung wird somit lediglich von der Buchse 7 auf die Trägerplatte 5 abgeleitet. Da sämtliche an der Schraub- bzw. Klemmverbindung beteiligten Materialien aus einem steifen, harten Material bestehen, ist die notwendige steife Anbindung des Körperschallsensors 2 an die Anbaufläche sichergestellt.

Das in der Fig. 1 dargestellte elektrische Gerät wird zum Beispiel an einem Karosseriebauteil im Motorraum angeordnet. Um einen zuverlässigen Schutz gegen in das Gehäuseinnere eindringende Feuchtigkeit zu erhalten, ist auf der Außenseite 11 des Gehäusedeckels eine Vergussmasse 20 aufgebracht, welche beispielsweise aus Polyurethan oder einem anderen geeigneten Material bestehen kann.

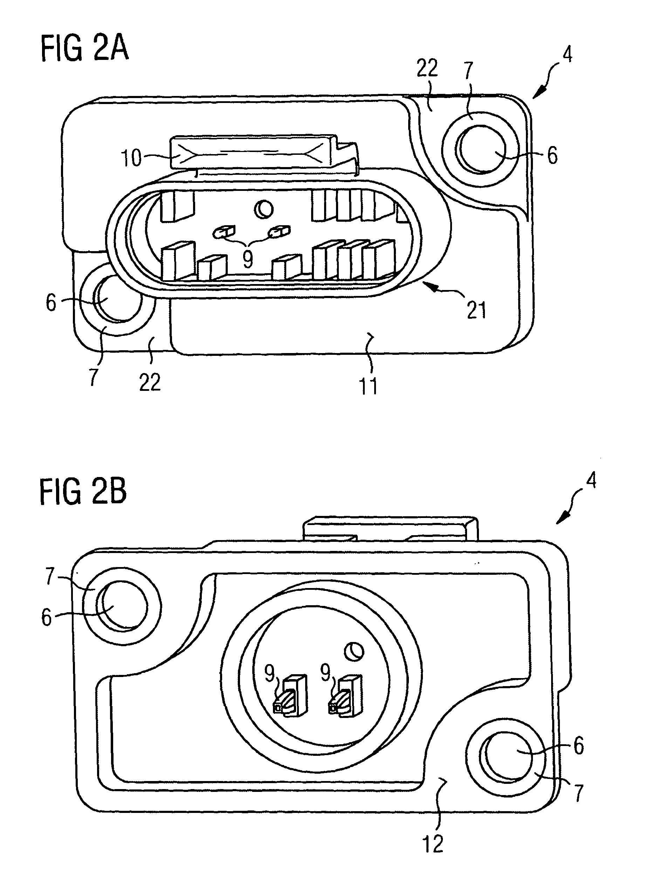

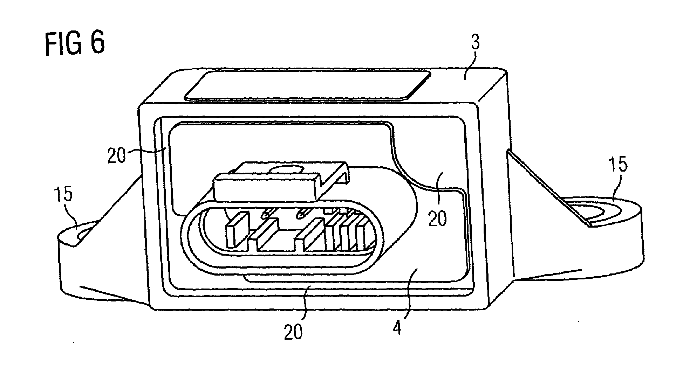

Die nachfolgenden Figuren 2 bis 6 zeigen die Bauteile des erfindungsgemäßen elektrischen Geräts jeweils in einer perspektivischen Darstellung und mit weiteren Details.

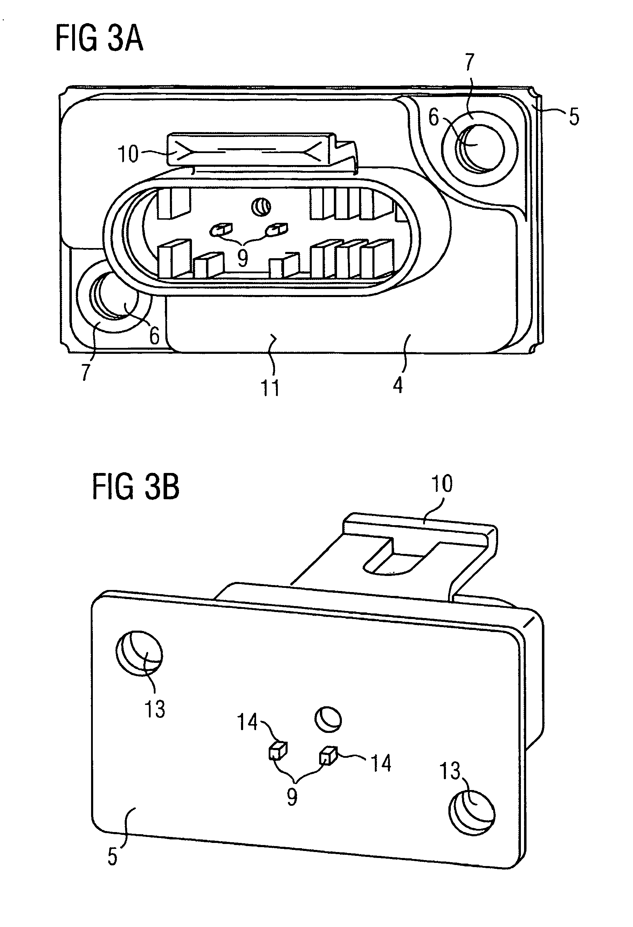

Die Figuren 2a und 2b zeigen jeweils einen Gehäusedeckel 4, einmal mit Sicht auf seine Außenseite 11 (Fig. 2a) und einmal mit Sicht auf seine Innenseite 12 (Fig. 2b). Aus Fig. 2a geht hervor, dass der Gehäusedeckel 4 die Funktion eines Steckerelements aufweist, indem auf seiner Außenseite 11 ein Steckerelement 21 mit einem daran angeformten Rasthaken 10 ausgebildet ist. Das Steckerelement 21 dient zur mechanischen und elektrischen Befestigung eines entsprechend ausgebildeten Adapters. Im Inneren des Steckerelements 21 sind beispielhaft zwei Kontaktelemente 9 dargestellt, die durch den Gehäusedeckel hindurch treten und ebenfalls auf der Innenseite 12 kontaktiert werden können (Fig. 2b). Die Kontaktelemente 9 dienen u. a. zur Herstellung eines elektrischen Kontaktes mit der Trägerplatte 5, was besser aus Fig. 3b hervorgeht. Die Trägerplatte 5 selbst ist (in der Figur nicht dargestellt) mit Leiterzügen versehen, die einen elektrischen Kontakt zu dem Sensor 2 herstellen (ebenfalls nicht dargestellt). Darüber hinaus kann natürlich auch eine Vielzahl weiterer elektrischer Bauelemente auf der Trägerplatte 5 angeordnet sein. Die Trägerplatte 5 wird durch die Kontaktelemente 9 nicht nur elektrisch kontaktiert, die Kontaktelemente 9 dienen zunächst auch zu einer "Vorfixierung" der Trägerplatte 5 an dem Gehäusedeckel 4, indem diese durch Öffnungen 14 in der Trägerplatte gesteckt werden.

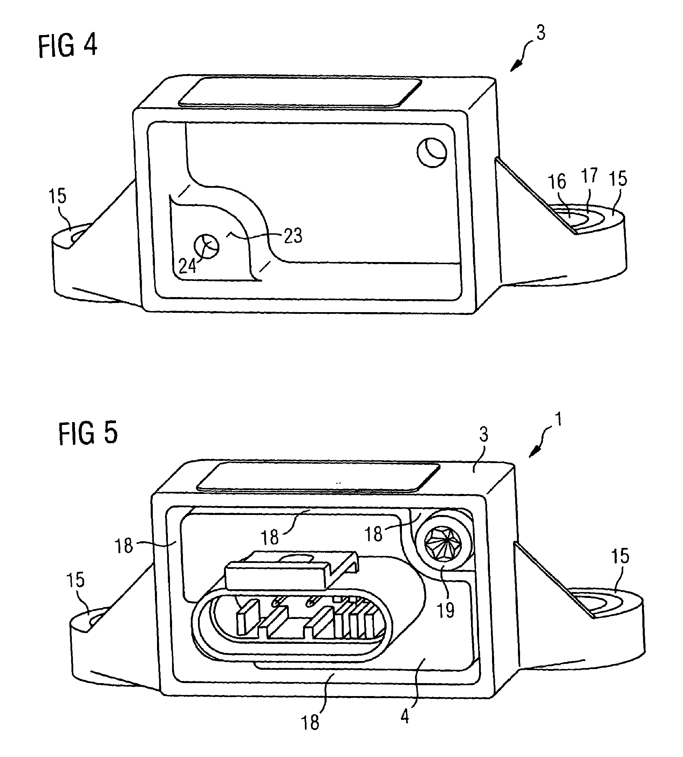

Die Befestigung des Gehäusedeckels 4 an dem Gehäusemantel 3 erfolgt durch zwei Schrauben, die durch die in dem Gehäusedeckel 4 diagonal gegenüberliegenden Durchbrüche 6 geführt werden können. In den Durchbrüchen 6 sind die im Zusammenhang mit Fig. 1 beschriebenen Buchsen 7 angeordnet. Die Durchbrüche bzw. die Buchsen sind dabei jeweils in abgesenkten Außenseitenabschnitten 22 angeordnet, so dass nach dem Herstellen der Schraubverbindung mit dem Gehäusemantel der Schraubenkopf nicht über die durch die Außenseite 11 definierte Fläche hervorsteht (siehe auch Fig. 5).

In Fig. 4 ist in perspektivischer Darstellung ein an den in den Figuren 2 und 3 dargestellten Gehäusedeckel 4 angepasster Gehäusemantel 3 gezeigt. Dieser verfügt über die im Zusammenhang mit Fig. 1 bereits beschriebenen Befestigungsflansche, in welchen Metallbuchsen 17 angeordnet sind. In den dabei entstehenden Durchbruch 16 können weitere Befestigungsmittel eingebracht werden, um den Gehäusemantel auf einer Auflagefläche 23 eines Bauteils zu befestigen. Weiterhin sichtbar ist eine in die Auflagefläche 23 eingebrachte Ausnehmung 24, in die Schraube eingedreht wird.

Figur 5 zeigt das erfindungsgemäße elektrische Gerät, nachdem der entsprechend Fig. 3 vorbereitete Gehäusedeckel in den Gehäusemantel 3 eingeschraubt wurde. Als Befestigungsmittel werden jeweils selbstfurchende Schrauben 19 verwendet, um eine Spanbildung im Inneren des Gehäusemantels zu vermeiden. Die zwischen dem Gehäusedeckel 4 und dem Gehäusemantel 3 entstehende Nut 18 wird mit einer Vergussmasse ausgefüllt, so dass das Innere des elektrischen Gerätes gegen Eindringen von Feuchtigkeit geschützt und darüber hinaus eine ebene Fläche geschaffen ist.

## Patentansprüche

1. Sensor zum Erfassen von Schwingungen mit
- einem Gehäuse, das einen Gehäusemantel (3) und einen Gehäusedeckel (4) umfasst und zur Befestigung an einer Anbaufläche ausgebildet ist,
- einem auf Schwingungen reagierenden Körperschallsensor (2), der auf einer in dem Gehäuse befestigten Trägerplatte (5) angeordnet und über diese kontaktierbar ist,
**gekennzeichnet dadurch dass**
- einem den Gehäusedeckel (4) bildenden Steckerelement (21) aus Kunststoff mit zumindest einem Kontaktelement, das sich von einer Außenseite (11) zu einer Innenseite (12) des Gehäuses erstreckt, um eine elektrische und mechanische Verbindung mit einem auf der Außenseite des Gehäuses entsprechend ausgebildeten Adapter sowie der Trägerplatte (5) im Inneren des Gehäuses zu ermöglichen, wobei
- der Gehäusemantel (3) aus einem steifen Material besteht und zur Befestigung an der Anbaufläche ausgebildet ist,
- die Trägerplatte (5) über zumindest ein Verbindungsmittel (19) mit dem Gehäusemantel (3) unter Druckbeaufschlagung steif verbunden ist, wobei der Körperschallsensor (2) in unmittelbarer Nähe zu einem der Verbindungsmittel (19) angeordnet ist, und
- die Befestigung der Trägerplatte (5) zur Übertragung von in der Anbaufläche erzeugten Körperschallwellen durch eine Klemmverbindung zwischen dem Gehäusemantel (3) und dem Gehäusedeckel (4) erfolgt.

2. Sensor nach Anspruch 1,
**dadurch gekennzeichnet, dass**
dieser zur Erfassung von Körperschallsignalen in einem Kraftfahrzeug vorgesehen ist.

3. Sensor nach einem der vorhergehenden Ansprüche,
**dadurch gekennzeichnet, dass**
der Gehäusedeckel (4) eine der Anzahl der Verbindungsmittel (19) entsprechende Anzahl an Durchbrüchen (6) aufweist, in die jeweils eine Buchse (7) eingelassen ist, wobei die auf die Trägerplatte wirkende Klemmkraft durch die Buchse und den Gehäusemantel ausgeübt wird.

4. Sensor nach Anspruch 3,
**dadurch gekennzeichnet, dass**
die Buchsen (7) zumindest über die dem Gehäuseinneren zugewandte Innenseite (12) des Gehäusedeckels hervorragen.

5. Sensor nach Anspruch 3 oder 4,
**dadurch gekennzeichnet, dass**
die Buchsen (7) aus Metall gefertigt sind und mit dem Material des Gehäusedeckels (4) umspritzt sind.

6. Sensor nach einem der vorhergehenden Ansprüche,
**dadurch gekennzeichnet, dass**
der Gehäusemantel (3) aus einem Metall besteht.

7. Sensor nach einem der vorhergehenden Ansprüche,
**dadurch gekennzeichnet, dass**
auf die Außenseite des Gehäusedeckels (4) zur Abdichtung des Gehäuseinneren eine Vergussmasse (20) aufgebracht ist.

8. Sensor nach einem der vorhergehenden Ansprüche,
**dadurch gekennzeichnet, dass**
das Gehäuse (2,3) mit zumindest einem Befestigungsflansch versehen ist, der einen rechtwinklig zur Anbaufläche verlaufenden Durchbruch (16) für den Durchtritt eines weiteren Befestigungsmittels zur Befestigung des Gehäuses an der Anbaufläche aufweist.

## Claims

1. A sensor for detecting vibrations having
- a housing that comprises a housing body (3) and a housing cover (4) and is designed to be fastened on a mounting surface,
- a structure-borne noise sensor (2) that reacts to vibrations and is arranged on and can be contacted via a support plate (5) fastened in the housing,
**characterised in that**
- a plug-type connector element (21) forming the housing cover made from plastic with at least one contact element extends from an exterior face (11) to an interior face (12) of the housing in order to permit electrical and mechanical connection with an adaptor of corresponding design on the exterior face of the housing and with the support plate (5) in the interior of the housing,
with
- the housing body (3) consists of a rigid material and is designed to be fastened on the mounting surface,
- the support plate (5) is connected rigidly to the housing body (3) under pressure by means of at least one connecting element (19), it being the case that the structure-borne noise sensor (2) is arranged directly adjacent to one of the connecting elements (19), and
- the support plate (5) for transmitting structure-borne waves generated in the mounting surface is fastened by means of a clamp connection between the housing cover body (3) and the housing cover (4).

2. Sensor according to claim 1,
**characterised in that** this is provided to detect structure-borne noise signals in a motor vehicle.

3. Sensor according to any of the preceding claims,
**characterised in that**
the housing cover (4) has a number of openings (6) equal to the number of connecting elements (19) into each of which openings a bush (7) is inserted, it being the case that the clamping force acting on the support plate is applied via the bush and the housing body.

4. Sensor according to claim 3,
**characterised in that**
the bushes (7) protrude at least beyond the interior face (12), facing the interior of the housing, of the housing cover.

5. Sensor according to claim 3 or 4,
**characterised in that**
the bushes (7) are made from metal and are injection molded with the material used for the housing cover (4).

6. Sensor according to one of the preceding claims,
**characterised in that**
the housing body (3) is made from a metal.

7. Sensor according to one of the preceding claims,
**characterised in that**
a sealing compound (20) is applied to the exterior face of the housing cover (4) to seal the interior of the housing.

8. Sensor according to one of the preceding claims,
**characterised in that** the housing (2,3) is provided with at least one mounting flange having an opening (16), extending at right-angles to the mounting surface, to permit the passage of a further fastener to fasten the housing to the mounting surface.

## Revendications

1. Capteur destiné à détecter des vibrations comprenant
- un boîtier qui comprend un corps de boîtier (3) et un couvercle de boîtier (4), et qui est conformé pour être fixé à une surface de montage,
- un capteur de son dans les solides (2) réagissant à des vibrations, qui est disposé sur une plaque porteuse (5) fixée dans le boîtier et qui peut être connecté par l'intermédiaire de cette plaque,
**caractérisé en ce qu'** il comprend
- une fiche mâle (2) en matière plastique formant le couvercle de boîtier (4) et munie d'au moins un élément de contact qui s'étend d'un côté extérieur (11) à un côté intérieur (12) du boîtier, pour permettre de réaliser une liaison électrique et mécanique avec un adaptateur formé de façon correspondante sur le côté extérieur du boîtier, ainsi qu'avec la plaque porteuse (5) située à l'intérieur du boîtier,
dans lequel
- le corps de boîtier (3) est fait d'un matériau rigide et est conformé pour être fixé à la surface de montage,
- la plaque porteuse (5) est reliée au corps de boîtier (3) rigidement et sous contrainte de compression par l'intermédiaire d'au moins un moyen de liaison (19), le capteur de son dans les solides (2) étant disposé à proximité immédiate de l'un des moyens de liaison (19), et
- la fixation de la plaque porteuse (5) servant à assurer la transmission des ondes de son dans les solides produites dans la surface de montage s'effectue par une liaison par serrage entre le corps de boîtier (3) et le couvercle de boîtier (4).

2. Capteur selon la revendication 1,
**caractérisé en ce qu'**
il est prévu pour détecter des signaux de son dans les solides dans un véhicule automobile.

3. Capteur selon une des revendications précédentes,
**caractérisé en ce que**
le couvercle de boîtier (4) présente un nombre d'ouvertures (6) qui correspond au nombre des moyens de liaison (19), dans chacune desquelles est emboîtée une douille (7), la force de serrage qui agit sur la plaque porteuse étant exercée par la douille et par le corps de boîtier.

4. Capteur selon la revendication 3,
**caractérisé en ce que**
les douilles (7) émergent au moins au-delà du côté intérieur (12) du couvercle de boîtier qui est dirigé vers l'intérieur du boîtier.

5. Capteur selon la revendication 3 ou 4,
**caractérisé en ce que**
les douilles (7) sont fabriquées en métal et sont encastrées par moulage dans le matériau du couvercle de boîtier (4).

6. Capteur selon une des revendications précédentes,
**caractérisé en ce que**
le corps de boîtier (3) est fait d'un métal.

7. Capteur selon une des revendications précédentes,
**caractérisé en ce qu'**
une masse de scellement (20) est appliquée sur le côté extérieur du couvercle de boîtier (4) pour assurer l'étanchéité de l'intérieur du boîtier.

8. Capteur selon une des revendications précédentes,
**caractérisé en ce que**
le boîtier (2, 3) est muni d'au moins une patte de fixation qui présente une ouverture (16) s'étendant perpendiculairement à la surface de montage, pour donner passage à un moyen de fixation supplémentaire servant à fixer le boîtier à la surface de montage.
